# EUROPEAN PATENT APPLICATION

(11) **EP 3 757 911 A1**
(43) Date of publication of application: **30.12.2020**
(21) Application number: 19888131.0
(22) Date of filing: 29.08.2019
(51) Int. Cl.: G06Q 10/02, G06Q 50/30

(54) **METHOD AND APPARATUS USED FOR RESERVING VEHICLE**

(30) Priority: 20.11.2018 CN 201811384911
(71) Applicant: Baidu Online Network Technology (Beijing) Co., Ltd., Beijing 100085 (CN)
(72) Inventor: WANG, Yue, Beijing 100085 (CN); MIN, Ruihao, Beijing 100085 (CN); XUE, Jingjing, Beijing 100085 (CN); LIU, Yingnan, Beijing 100085 (CN); RAO, Wenlong, Beijing 100085 (CN); GONG, Wei, Beijing 100085 (CN)
(74) Representative: Richly & Ritschel Patentanwälte PartG mbB
(86) International application number: PCT/CN2019/103250
(87) International publication number: WO 2020/103513

(57) **Abstract**

Disclosed by embodiments of the present application are a method and apparatus used for reserving a vehicle. The detailed description of the preferred embodiment of said method comprises: receiving a vehicle reservation request submitted by a user, the vehicle reservation request comprising place of departure information and destination information; sending the vehicle reservation request to a server that provides support for reserving vehicles, the server being configured to, on the basis of the vehicle reservation request, determine that a self-driving vehicle of the user needs to be picked up. The described preferred embodiment reduces the labor costs of user travel and increases the safety of user travel.

## Description

This application claims the priority from Chinese Application No. 201811384911.3, filed on November 20, 2018 by Baidu Online Network Technology (Beijing) Co., Ltd, titled "Method and Apparatus for Reserving Vehicle," the entire disclosure of which is hereby incorporated by reference.

### TECHNICAL FIELD

Embodiments of the present disclosure relate to the field of computer technology, and specifically to a method and an apparatus for reserving a vehicle.

### BACKGROUND

The increasing popularity of family cars and the increasing number of commercial cars bring a great convenience to user travel. However, taxis are still an important means of transport in modern cities. For example, when in a business trip or in an unfamiliar city, users generally do not take a self-driving approach, but choose to take a taxi to their destinations.

Usually, the approach of "waving to stop" is used for a taxi. That is, a passenger waves a hand towards the taxi on the street, and the taxi immediately pulls over (under the circumstance that the traffic regulations allow the taxi to pull over). The passenger informs the taxi driver of the destination after getting into the taxi, and the taxi driver drives the taxi to carry the passenger to the destination.

In addition, various kinds of mobile phone taxi hailing software emerge in order to avoid that a passenger having a need to take a taxi cannot meet an "empty" taxi for a long time, or a driver of an empty taxi looks for passengers around for a long time. In a taxi hailing interface, the passenger may conveniently issue the need to take the taxi, and the taxi driver may select whether to accept the order according to a route, taxi fare, etc.

### SUMMARY

The embodiment of the disclosure provides a method and a apparatus for reserving a vehicle.

According to a first aspect, an embodiment of the present disclosure provides a method for reserving a vehicle, applied to a mobile terminal, the method including: receiving a vehicle reservation request submitted by a user, the vehicle reservation request including departure place information and destination information; and sending the vehicle reservation request to a server providing support to a reservation of the vehicle, the server being configured to determine, based on the vehicle reservation request, an autonomous driving vehicle for picking up and dropping off the user.

In some embodiments, the method further includes receiving a vehicle reservation result returned by the server, the vehicle reservation result including vehicle information of the autonomous driving vehicle and estimated pick-up and drop-off information.

In some embodiments, the vehicle reservation request further includes a desired departing moment and/or a desired arrival moment.

In some embodiments, the method further includes receiving, in real time, location information of the autonomous driving vehicle sent by the server; and displaying, in real time, a driving trajectory of the autonomous driving vehicle in an electronic map..

In some embodiments, the method further includes sending a manual customer service call request to the server in response to detecting a manual customer service call operation submitted by the user, the manual customer service call request including a user identification of the user.

According to a second aspect, an embodiment of the present disclosure provides a method for reserving a vehicle, applied to a server, the method including: receiving a vehicle reservation request sent by a mobile terminal, the vehicle reservation request including departure place information and destination information; determining, based on the vehicle reservation request, an autonomous driving vehicle for picking up and dropping off a user; sending a driving command to the autonomous driving vehicle, the driving command being used for controlling the autonomous driving vehicle to travel to a place indicated by the departure place information.

In some embodiments, the method further includes sending a vehicle reservation result to the mobile terminal, the vehicle reservation result including vehicle information of the autonomous driving vehicle and estimated pick-up and drop-off information.

In some embodiments, the vehicle reservation request further includes a desired departing moment and/or a desired arrival moment.

In some embodiments, the method further comprises acquiring, in real time, location information of the autonomous driving vehicle; and sending, in real time, the location information of the autonomous driving vehicle to the mobile terminal.

In some embodiments, the method further comprises determining a customer service terminal providing a call service for the user, in response to receiving a manual customer service call request sent by the mobile terminal; and establishing a voice/video communication connection between the mobile terminal and the customer service terminal.

According to a third aspect, an embodiment of the present disclosure provides an apparatus for reserving a vehicle, applied to a mobile terminal, the apparatus including: a vehicle reservation request receiving unit, configured to receive a vehicle reservation request submitted by a user, the vehicle reservation request including departure place information and destination information; and a vehicle reservation request sending unit, configured to send the vehicle reservation request to a server providing support to a reservation of the vehicle, the server being configured to determine, based on the vehicle reservation request, an autonomous driving vehicle for picking up and dropping off the user.

In some embodiments, the apparatus further includes a result receiving unit configured to receive a vehicle reservation result returned by the server, the vehicle reservation result including vehicle information of the autonomous driving vehicle and estimated pick-up and drop-off information.

In some embodiments, the vehicle reservation request further includes a desired departing moment and/or a desired arrival moment.

In some embodiments, the apparatus further includes a location information receiving unit configured to receive, in real time, location information of the autonomous driving vehicle sent by the server; and a trajectory displaying unit configured to display a driving trajectory of the autonomous driving vehicle in an electronic map.

In some embodiments, the apparatus further includes a call request sending unit configured to send a manual customer service call request to the server in response to detecting a manual customer service call operation submitted by the user, the manual customer service call request including a user identification of the user.

According to a fourth aspect, an embodiment of the present disclosure provides an apparatus for reserving a vehicle, applied to a server, the apparatus including: a vehicle reservation request receiving unit, configured to receive a vehicle reservation request sent by a mobile terminal, the vehicle reservation request including departure place information and destination information; a vehicle determining unit, configured to determine, based on the vehicle reservation request, an autonomous driving vehicle for picking up and dropping off a user; and a driving command sending unit, configured to send a driving command to the autonomous driving vehicle, the driving command being used for controlling the autonomous driving vehicle to travel to a place indicated by the departure place information.

In some embodiments, the apparatus further includes a result sending unit configured to send a vehicle reservation result to the mobile terminal, the vehicle reservation result including vehicle information of the autonomous driving vehicle and estimated pick-up and drop-off information.

In some embodiments, the vehicle reservation request further includes a desired departing moment and/or a desired arrival moment.

In some embodiments, the apparatus further includes a location information acquiring unit configured to acquire, in real time, location information of the autonomous driving vehicle; and a location information sending unit configured to send, in real time, the location information of the autonomous driving vehicle to the mobile terminal.

In some embodiments, the apparatus further includes a customer service terminal determining unit configured to determine a customer service terminal providing a call service for the user, in response to receiving a manual customer service call request sent by the mobile terminal; and a communication connection establishing unit configured to establish a voice/video communication connection between the mobile terminal and the customer service terminal.

According to a fifth aspect, an embodiment of the present disclosure provides an electronic device including one or more processors; a storage apparatus storing one or more programs, where when the one or more programs are executed by one or more processors, one or more processors are caused to implement the method as described in any embodiments in the first aspect or the second aspect.

In a sixth aspect, an embodiment of the present disclosure provides a computer readable medium storing a computer program which, when executed by a processor, implements the method as described in any embodiment in first aspect or the second aspect.

According to a method and apparatus for reserving a vehicle according to an embodiment of the present disclosure, a vehicle reservation request submitted by a user is received, the vehicle reservation request including departure place information and destination information, and then the vehicle reservation request is sent to a server providing support to a reservation of the vehicle, the server being configured to determine, based on the vehicle reservation request, an autonomous driving vehicle for picking up and dropping off the user, thereby reducing a labor cost of travel of the user and improving security of travel of the user.

### BRIEF DESCRIPTION OF THE DRAWINGS

After reading detailed descriptions for non-limiting embodiments given with reference to the following accompanying drawings, other features, objectives and advantages of the present disclosure will be more apparent:
Fig. 1 is an example system architecture in which an embodiment of the present disclosure may be applied;
Fig. 2 is a flowchart of an embodiment of a method for reserving a vehicle according to the present disclosure;
Fig. 3 is a schematic diagram of an application scenario of the method for reserving a vehicle according to the present disclosure;
Fig. 4 is a flowchart of another embodiment of the method for reserving a vehicle according to the present disclosure;
Fig. 5 is a schematic structural diagram of an embodiment of an apparatus for reserving a vehicle according to the present disclosure;
Fig. 6 is a schematic structural diagram of another embodiment of the apparatus for reserving a vehicle according to the present disclosure; and
Fig. 7 is a schematic structural diagram of a computer system adapted to implement an electronic device according to embodiments of the present disclosure.

### DETAILED DESCRIPTION OF EMBODIMENTS

The present disclosure is further described below in detail by combining the accompanying drawings and the embodiments. It may be appreciated that the specific embodiments described herein are merely used for explaining the relevant disclosure, rather than limiting the disclosure. In addition, it should be noted that, for ease of description, only parts related to the relevant disclosure are shown in the accompanying drawings.

It should also be noted that the embodiments in the present disclosure and the features in the embodiments may be combined with each other on a non-conflict basis. The present disclosure will be described below in detail with reference to the accompanying drawings and in combination with the embodiments.

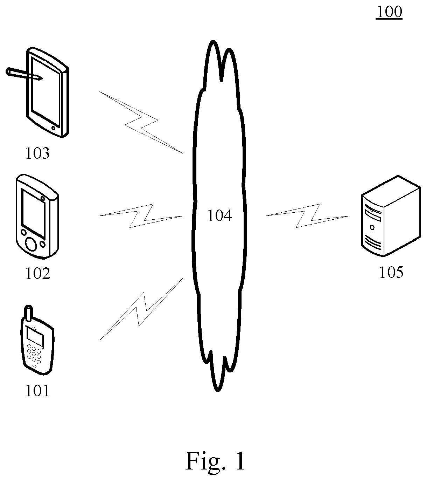

Fig. 1 illustrates an example system architecture 100 in which an embodiment of a method for reserving a vehicle or an apparatus for reserving a vehicle according to the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may interact with the server 105 via the network 104 by using the terminal devices 101, 102 and 103, to receive or send a message, etc. Various client applications (e.g., a taxi application, a webpage browser application, a shopping application, a search application, an instant communication tool, a mailbox client, and social platform software) may be installed on the terminal devices 101, 102 and 103.

The terminal devices 101, 102 and 103 may be hardware or software. When being the hardware, the terminal devices 101, 102 and 103 may be various electronic devices having a display screen and supporting a vehicle reservation, the electronic devices including, but not limited to, a smart phone, a tablet computer, a personal digital assistant (PDA), etc. When being the software, the terminal devices 101, 102 and 103 may be installed in the above listed electronic devices. The terminal devices may be implemented as a plurality of pieces of software or a plurality of software modules (e.g., software pieces or software modules for providing a distributed service), or may be implemented as a single piece of software or a single software module, which will not be specifically defined here.

The server 105 may be a server providing various services, for example, a backend server providing support to the taxi application running on the terminal devices 101, 102 and 103. The server 105 may process and analyze the received data such as a received vehicle reservation request, and feed back the processing result (e.g., a vehicle reservation result) to the terminal devices 101, 102 and 103.

It should be noted that the method for reserving a vehicle provided in the embodiments of the present disclosure may be performed by the terminal devices 101, 102 and 103, or performed by the server 105. Accordingly, the apparatus for reserving a vehicle may be disposed in the terminal devices 101, 102 and 103, or disposed in the server 105.

It should be noted that the server 105 may be hardware or software. When being the hardware, the server 105 may be implemented as a distributed server cluster composed of a plurality of servers, or may be implemented as a single server. When being the software, the server may be implemented as a plurality of pieces of software or a plurality of software modules (e.g., software pieces or software modules for providing a distributed service), or may be implemented as a single piece of software or a single software module, which will not be specifically defined here.

It should be appreciated that the numbers of the terminal devices, the networks and the servers in Fig. 1 are merely illustrative. Any number of terminal devices, networks and servers may be provided based on actual requirements.

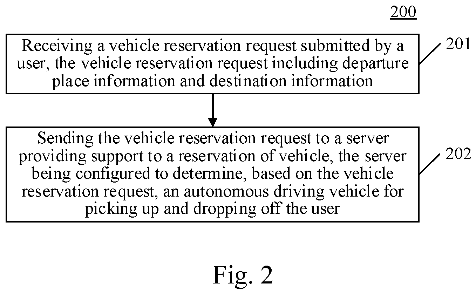

Further referring to Fig. 2, Fig. 2 illustrates a flow 200 of an embodiment of a method for reserving a vehicle according to the present disclosure. The method for reserving a vehicle may include the following steps.

Step 201 includes receiving a vehicle reservation request submitted by a user.

In this embodiment, an executing body (e.g., the terminal devices 101, 102 and 103 shown in Fig. 1) of the method for reserving a vehicle may receive the vehicle reservation request submitted by the user (e.g., a passenger having a need to take a taxi). Here, the vehicle reservation request may include departure place information and destination information. Here, the vehicle reservation request may be a request submitted by the user through a text input, or may be a request submitted by the user through a voice input. For example, the user may input the departure place information and the destination information in a vehicle reservation interface, and then click the button "I want to reserve a vehicle" to submit the request. As another example, the user may issue the voice request "I'm going to the zoo from home." The departure place information may be location information of a location where the user is currently located (e.g., location information acquired through a GPS (Global Positioning System)), or may be location information of a location (e.g., home and school) designated by the user. The destination information may be location information of a place (e.g., zoo) the user desires to arrive at.

In some alternative implementations of this embodiment, the vehicle reservation request may further include a desired departing moment and/or a desired arrival moment. For example, the user may issue the voice request "I want to depart from home at 10 o'clock to go to the zoo."

Step 202 includes sending the vehicle reservation request to a server providing support to a reservation of a vehicle.

In this embodiment, the executing body (e.g., the terminal devices 101, 102 and 103 in Fig. 1) of the method for reserving a vehicle may send the vehicle reservation request received in step 201 to the server (e.g., the server 105 in Fig. 1), such that the server may determine an autonomous driving vehicle for picking up and dropping off the user, based on the vehicle reservation request. For example, the server may select an autonomous driving vehicle closest to the place indicated by the departure place information from autonomous driving vehicles with no passenger as the autonomous driving vehicle for picking up and dropping off the user. Here, the server may be a backend server providing the support to the reservation of the vehicle.

When the vehicle reservation request further includes the desired departing moment and/or the desired arrival moment, the server may select the autonomous driving vehicle for picking up and dropping off the user from the autonomous driving vehicles with no passenger, based on the departure place information, the destination information, the desired departing moment and/or the desired arrival moment. For example, the server may select, from autonomous driving vehicles that do not carry any passenger at the desired departing moment, an autonomous driving vehicle that is closest to the place indicated by the departure place information and can arrive at a place indicated by the destination information at the desired arrival moment.

As compared with a taxi-hailing approach of accepting a reservation by a taxi driver, in the method for reserving a vehicle provided in this embodiment, it is not required to manually drive a vehicle (such that a driver does not need to be authenticated), and thus, the labor cost of user travel can be reduced. In addition, since it is not required to manually drive the vehicle to carry the passenger, a hurt between the driver and the passenger (e.g., a driver intentionally harms a female passenger, or a passenger intentionally harms a female driver) may be avoided, thereby improving the safety of the user travel.

In some alternative implementations of this embodiment, the method for reserving a vehicle may further include receiving a vehicle reservation result returned by the server. Here, the vehicle reservation result may include vehicle information (e.g., a license plate number and vehicle type information) of the autonomous driving vehicle and estimated pick-up and drop-off information (e.g., estimated waiting time and estimated arrival time).

In some alternative implementations of this embodiment, the method for reserving a vehicle may further include: receiving, in real time, location information (e.g., the location information of the current vehicle location uploaded in real time by the autonomous driving vehicle determined in step 202) of the autonomous driving vehicle sent by the server; and displaying, in real time, a driving trajectory of the autonomous driving vehicle in an electronic map (e.g., an electronic map displayed in taxi hailing software or a third-party electronic map that may be called by the taxi hailing software). Displaying the driving trajectory of the vehicle in real time helps the user understand the location of the vehicle in real time and clearly, such that it may be avoided that the user blindly waits for the arrival of the vehicle, and thus, the satisfaction of the user can be improved.

In some alternative implementations of this embodiment, the method for reserving a vehicle may further include: sending a manual customer service call request to the server in response to detecting a manual customer service call operation submitted by the user. Here, the manual customer service call request includes a user identification (e.g., a user name or a mobile phone number) of the user. In this way, when encountering a problem (e.g., an abnormality occurs in the autonomous driving vehicle) and needing assistance, the user may be assisted by a manual customer service (e.g., a cloud background staff) by sending a call request, thereby further improving the safety and satisfaction of the user travel.

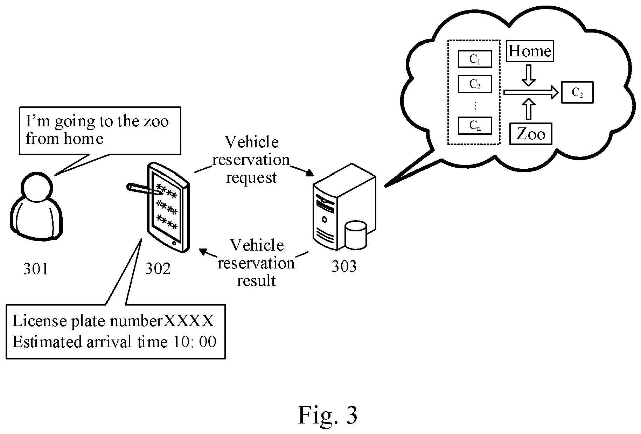

Further referring to Fig. 3, Fig. 3 illustrates an application scenario of the method for reserving a vehicle according to the present disclosure. In the application scenario of Fig. 3, the user 301 issues a voice request to reserve a vehicle to the smartphone 302 running taxi hailing software: "I'm going to the zoo from home." After receiving the voice request of the user, the smartphone 302 recognizes the departure place information "home" and the destination information "zoo," and sends a vehicle reservation request including the departure place information "home" and the destination information "zoo" to the cloud server 303. The cloud server 303 acquires autonomous driving vehicles Cl-Cn (n is a natural number) in a no-passenger state, and selects the autonomous driving vehicle C2 closest to the home of the user 301 and capable of carrying the user 301 to the destination, as the autonomous driving vehicle reserved by the user 301. Then, the vehicle reservation result containing the license plate information and the location information of the autonomous driving vehicle C2 is returned to the smartphone 302. The smartphone 302 may display the location of the autonomous driving vehicle C2 and the estimated arrival time in the electronic map displayed by the smartphone 302 (or play the reservation information "license plate number XXXX, estimated arrival time 10: 00" to the user in the form of voice) .

According to the method for reserving a vehicle provided in the embodiment of the present disclosure, the vehicle reservation request including the departure place information and the destination information is received, and the vehicle reservation request is then sent to the server providing the support to the reservation of the vehicle, such that the server determines the autonomous driving vehicle for picking up and dropping off the user based on the vehicle reservation request, thereby reducing the labor cost of the user travel and improving the safety of the user travel.

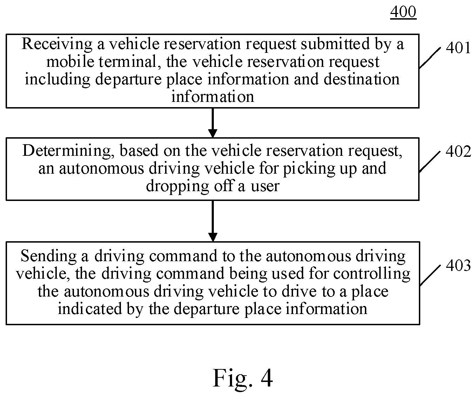

Further referring to Fig. 4, Fig. 4 illustrates a flow 400 of another embodiment of the method for reserving a vehicle according to the present disclosure. The method for reserving a vehicle may include the following steps.

Step 401 includes receiving a vehicle reservation request submitted by a mobile terminal.

In this embodiment, an executing body (e.g., the server 105 shown in Fig. 1) of the method for reserving a vehicle may receive the vehicle reservation request submitted by the mobile terminal (e.g., the terminal devices 101, 102 and 103 shown in Fig. 1). Here, the vehicle reservation request may include departure place information and destination information. Here, the vehicle reservation request may be a request submitted to the mobile terminal by a user through a text input, or may be a request submitted to the mobile terminal by the user through a voice input. For example, the user may input the departure place information and the destination information in a vehicle reservation interface of the mobile terminal, and then click the button "I want to reserve a vehicle" to submit the request. As another example, the user may issue the voice request "I'm going to the zoo from home." The departure place information may be location information of a location where the user is currently located (e.g., location information acquired through a GPS), or may be location information of a location (e.g., home and school) designated by the user. The destination information may be location information of a place (e.g., zoo) the user desires to arrive at.

In some alternative implementations of this embodiment, the vehicle reservation request may further include a desired departing moment and/or a desired arrival moment. For example, the user may issue the voice request "I want to depart from home at 10 o'clock to go to the zoo."

Step 402 includes determining, based on the vehicle reservation request, an autonomous driving vehicle for picking up a user.

In this embodiment, the executing body (e.g., the server 105 in Fig. 1) of the method for reserving a vehicle may determine the autonomous driving vehicle for picking up and dropping off the user, based on the received vehicle reservation request. For example, the server may select an autonomous driving vehicle closest to the place indicated by the departure place information from autonomous driving vehicles with no passenger, as the autonomous driving vehicle for picking up and dropping off the user.

When the vehicle reservation request further includes the desired departing moment and/or the desired arrival moment, the server may select the autonomous driving vehicle for picking up and dropping of the user from the autonomous driving vehicles with no passenger, based on the departure place information, the destination information, the desired departing moment and/or the desired arrival moment. For example, the server may select, from autonomous driving vehicles that do not carry any passenger at the desired departing moment, an autonomous driving vehicle that is closest to the place indicated by the departure place information and can arrive at a place indicated by the destination information at the desired arrival moment.

Step 403 includes sending a driving command to the autonomous driving vehicle.

In this embodiment, the executing body (e.g., the server 105 shown in Fig. 1) of the method for reserving a vehicle may send the driving command to the autonomous driving vehicle selected in step 402, such that the selected autonomous driving vehicle can arrive at the place indicated by the departure place information. Here, the driving command may be used for controlling the autonomous driving vehicle to travel to the place indicated by the departure place information.

As compared with a taxi hailing approach of accepting a reservation by a taxi driver, in the method for reserving a vehicle provided in this embodiment, it is not required to manually drive a vehicle (such that a driver does not need to be authenticated), and thus, the labor cost of user travel can be reduced. In addition, since it is not required to manually drive the vehicle to carry the passenger, a hurt between the driver and the passenger (e.g., a driver intentionally harms a female passenger, or a passenger intentionally harms a female driver) may be avoided, thereby improving the safety of the user travel.

In some alternative implementations of this embodiment, the method for reserving a vehicle may further include sending a vehicle reservation result to the mobile terminal. Here, the vehicle reservation result may include vehicle information (e.g., a license plate number and vehicle type information) of the autonomous driving vehicle and estimated pick-up and drop-off information (e.g., estimated waiting time and estimated arrival time).

In some alternative implementations of this embodiment, the method for reserving a vehicle may further include: acquiring, in real time, location information (e.g., the location information of the current vehicle location of uploaded in real time by the selected autonomous driving vehicle) of the autonomous driving vehicle; and sending, in real time, the acquired location information of the autonomous driving vehicle to the mobile terminal, such that the mobile terminal displays, in real time, a driving trajectory of the autonomous driving vehicle in an electronic map (e.g., an electronic map displayed in taxi hailing software or a third-party electronic map that can be called by the taxi hailing software).

In some alternative implementations of this embodiment, the method for reserving a vehicle may further include: determining a customer service terminal providing a call service for the user (e.g., selecting the customer service terminal from idle customer service terminals), in response to receiving a manual customer service call request sent by the mobile terminal; and establishing a voice/video communication connection between the mobile terminal and the customer service terminal. Thus, the holder (i.e., the passenger) of the mobile terminal may have a voice call/video communication with the manual customer service(e.g., a cloud background staff). Here, the manual customer service call request includes a user identification (e.g., a user name or a mobile phone number) of the user.

According to the method for reserving a vehicle provided in the embodiment of the present disclosure, the vehicle reservation request including the departure place information and the destination information and being sent by the mobile terminal is received. Then, based on the information in the vehicle reservation request, the autonomous driving vehicle for picking up and dropping off the user is determined. Further, the driving command is sent to the determined autonomous driving vehicle. Thus, the labor cost of the user travel is reduced, and the safety of the user travel is improved.

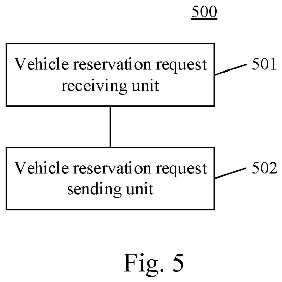

Further referring to Fig. 5, as an implementation of the method shown in Fig. 2, the present disclosure provides an embodiment of an apparatus for reserving a vehicle. The embodiment of the apparatus corresponds to the embodiment of the method shown in Fig. 2, and the apparatus may be applied to a mobile terminal.

As shown in Fig. 5, the apparatus 500 for reserving a vehicle in this embodiment may include a vehicle reservation request receiving unit 501 and a vehicle reservation request sending unit 502. Here, the vehicle reservation request receiving unit 501 is configured to receive a vehicle reservation request submitted by a user, the vehicle reservation request including departure place information and destination information; and the vehicle reservation request sending unit 502 is configured to send the vehicle reservation request to a server providing support to a reservation of a vehicle, the server being configured to determine, based on the vehicle reservation request, an autonomous driving vehicle for picking up and dropping off the user.

In this embodiment, the vehicle reservation request receiving unit 501 of the apparatus 500 for reserving a vehicle may receive the vehicle reservation request submitted by the user (e.g., a passenger having a need to take a taxi). Here, the vehicle reservation request may include the departure place information and the destination information. Here, the vehicle reservation request may be a request submitted by the user through a text input, or may be a request submitted by the user through a voice input. For example, the user may input the departure place information and the destination information in a vehicle reservation interface, and then click the button "I want to reserve a vehicle" to submit the request. As another example, the user may issue the voice request "I'm going to the zoo from home." The departure place information may be location information of a location where the user is currently located (e.g., location information acquired through a GPS (Global Positioning System)), or may be location information of a location (e.g., home and school) designated by the user. The destination information may be location information of a place (e.g., zoo) the user desires to arrive at.

In some alternative implementations of this embodiment, the vehicle reservation request may further include a desired departing moment and/or a desired arrival moment. For example, the user may issue the voice request "I want to depart from home at 10 o'clock to go to the zoo."

In this embodiment, the vehicle reservation request sending unit 502 may send the received vehicle reservation request to the server (e.g., the server 105 in Fig. 1), such that the server may determine the autonomous driving vehicle for picking up and dropping off the user, based on the vehicle reservation request. For example, the server may select an autonomous driving vehicle closest to the place indicated by the departure place information from autonomous driving vehicles with no passenger as the autonomous driving vehicle for picking up and dropping off the user. Here, the server may be a backend server providing the support to the reservation of the vehicle.

As compared with a taxi hailing approach of accepting a reservation by a taxi driver, in the method for reserving a vehicle provided in this embodiment, it is not required to manually drive a vehicle (such that a driver does not need to be authenticated), and thus, the labor cost of user travel can be reduced. In addition, since it is not required to manually drive the vehicle to carry the passenger, a hurt between the driver and the passenger (e.g., a driver intentionally harms a female passenger, or a passenger intentionally harms a female driver) may be avoided, thereby improving the safety of the user travel.

In some alternative implementations of this embodiment, the apparatus 500 for reserving a vehicle may further include a result receiving unit. Here, the result receiving unit is configured to receive a vehicle reservation result returned by the server. Here, the vehicle reservation result may include vehicle information of the autonomous driving vehicle and estimated pick-up and drop-off information.

In some alternative implementations of this embodiment, the apparatus 500 for reserving a vehicle may further include a location information receiving unit and a trajectory displaying unit. Here, the location information receiving unit is configured to receive, in real time, location information of the autonomous driving vehicle sent by the server. The trajectory displaying unit is configured to display, in real time, a driving trajectory of the autonomous driving vehicle in an electronic map.

In some alternative implementations of this embodiment, the apparatus 500 for reserving a vehicle may further include a call request sending unit. Here, the call request sending unit is configured to send a manual customer service call request to the server in response to detecting a manual customer service call operation submitted by the user. Here, the manual customer service call request includes a user identification of the user.

According to the apparatus for reserving a vehicle provided in the embodiment of the present disclosure, the vehicle reservation request including the departure place information and the destination information is received, and the vehicle reservation request is then sent to the server providing the support to the reservation of the vehicle, such that the server determines the autonomous driving vehicle for picking up and dropping off the user based on the vehicle reservation request, thereby reducing the labor cost of the user travel and improving the safety of the user travel.

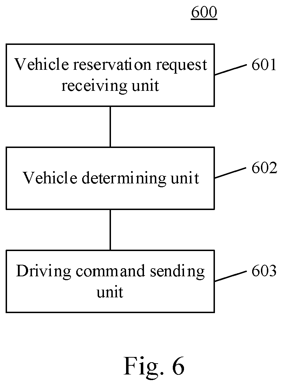

Further referring to Fig. 6, as an implementation of the method shown in Fig. 4, the present disclosure provides another embodiment of the apparatus for reserving a vehicle. The embodiment of the apparatus corresponds to the embodiment of the method shown in Fig. 4, and the apparatus may be applied to a server.

As shown in Fig. 6, the apparatus 600 for reserving a vehicle in this embodiment may include a vehicle reservation request receiving unit 601, a vehicle determining unit 602 and a driving command sending unit 603. Here, the vehicle reservation request receiving unit 601 is configured to receive a vehicle reservation request sent by a mobile terminal, the vehicle reservation request including departure place information and destination information. The vehicle determining unit 602 is configured to determine, based on the vehicle reservation request, an autonomous driving vehicle for picking up and dropping off a user. The driving command sending unit 603 is configured to send a driving command to the autonomous driving vehicle, the driving command being used for controlling the autonomous driving vehicle to travel to a place indicated by the departure place information.

In this embodiment, the vehicle reservation request receiving unit 601 of the apparatus 600 for reserving a vehicle receives the vehicle reservation request submitted by the mobile terminal (e.g., the terminal devices 101, 102 and 103 shown in Fig. 1). Here, the vehicle reservation request may include the departure place information and the destination information. Here, the vehicle reservation request may be a request submitted to the mobile terminal by a user through a text input, or may be a request submitted to the mobile terminal by the user through a voice input. For example, the user may input the departure place information and the destination information in a vehicle reservation interface of the mobile terminal, and then click the button "I want to reserve a vehicle" to submit the request. As another example, the user may issue the voice request "I'm going to the zoo from home." The departure place information may be location information of a location where the user is currently located (e.g., location information acquired through a GPS), or may be location information of a location (e.g., home and school) designated by the user. The destination information may be location information of a place (e.g., zoo) the user desires to arrive at.

In some alternative implementations of this embodiment, the vehicle reservation request may further include a desired departing moment and/or a desired arrival moment. For example, the user may issue the voice request "I want to depart from home at 10 o'clock to go to the zoo."

In this embodiment, the vehicle determining unit 602 of the apparatus 600 for reserving a vehicle determines the autonomous driving vehicle for picking up and dropping off the user, based on the received vehicle reservation request. For example, the server may select an autonomous driving vehicle closest to the place indicated by the departure place information from autonomous driving vehicles with no passenger as the autonomous driving vehicle for picking up and dropping off the user.

In this embodiment, the driving command sending unit 603 of the apparatus 600 for reserving a vehicle sends the driving command to the selected autonomous driving vehicle, such that the selected autonomous driving vehicle can arrive at the place indicated by the departure place information. Here, the driving command may be used for controlling the autonomous driving vehicle to drive to the place indicated by the departure place information.

As compared with a taxi hailing approach of accepting a reservation by a taxi driver, according to the apparatus for reserving a vehicle provided in this embodiment, it is not required to manually drive a vehicle (such that a driver does not need to be authenticated), and thus, the labor cost of user travel can be reduced. In addition, since it is not required to manually drive the vehicle to carry the passenger, a hurt between the driver and the passenger (e.g., a driver intentionally harms a female passenger, or a passenger intentionally harms a female driver) may be avoided, thereby improving the safety of the user travel.

In some alternative implementations of this embodiment, the apparatus 600 for reserving a vehicle may further include a result sending unit. Here, the result sending unit is configured to send a vehicle reservation result to the mobile terminal. Here, the vehicle reservation result may include vehicle information of the autonomous driving vehicle and estimated pick-up and drop-off information.

In some alternative implementations of this embodiment, the apparatus 600 for reserving a vehicle may further include a location information acquiring unit and a location information sending unit. Here, the location information acquiring unit is configured to acquire, in real time, location information of the autonomous driving vehicle. The location information sending unit is configured to send, in real time, the acquired location information of the autonomous driving vehicle to the mobile terminal.

In some alternative implementations of this embodiment, the apparatus 600 for reserving a vehicle may further include a customer service terminal determining unit and a communication connection establishing unit. Here, the customer service terminal determining unit is configured to determine a customer service terminal providing a call service for the user, in response to receiving a manual customer service call request sent by the mobile terminal. The communication connection establishing unit is configured to establish a voice/video communication connection between the mobile terminal and the customer service terminal.

According to the apparatus for reserving a vehicle provided in the embodiment of the present disclosure, the vehicle reservation request including the departure place information and the destination information and being sent by the mobile terminal is received. Then, based on the information in the vehicle reservation request, the autonomous driving vehicle for picking up and dropping off the user is determined. Next, the driving command is sent to the determined autonomous driving vehicle. Thus, the labor cost of the user travel is reduced, and the safety of the user travel is improved.

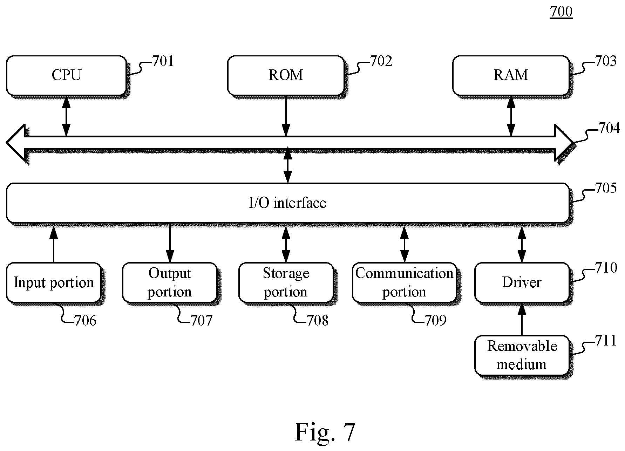

Referring now to Fig. 7, there is shown a schematic structural diagram of a computer system 700 adapted for implementing an electronic device (e.g., terminal device 101, 102, 103 or server 105 of Fig. 1) of an embodiment of the present disclosure. The electronic device shown in Fig. 7 is merely an example and should not be construed as limiting the functionality and scope of use of embodiments of the present application.

As shown in Fig. 7, the computer system 700 includes a central processing unit (CPU) 701, which may execute various appropriate actions and processes in accordance with a program stored in a read-only memory (ROM) 702 or a program loaded into a random access memory (RAM) 703 from a storage portion 708. The RAM 703 also stores various programs and data required by operations of the system 700. The CPU 701, the ROM 702 and the RAM 703 are connected to each other through a bus 704. An input/output (I/O) interface 705 is also connected to the bus 704.

The following components are connected to the I/O interface 705: an input portion 706 including a keyboard, a mouse etc.; an output portion 707 comprising a cathode ray tube (CRT), a liquid crystal display device (LCD), a speaker etc.; a storage portion 708 including a hard disk and the like; and a communication portion 709 comprising a network interface card, such as a LAN card and a modem. The communication portion 709 performs communication processes via a network, such as the Internet. A driver 710 is also connected to the I/O interface 705 as required. A removable medium 711, such as a magnetic disk, an optical disk, a magneto-optical disk, and a semiconductor memory, may be installed on the driver 710, to facilitate the retrieval of a computer program from the removable medium 711, and the installation thereof on the storage portion 708 as needed.

In particular, according to embodiments of the present disclosure, the process described above with reference to the flow chart may be implemented in a computer software program. For example, an embodiment of the present disclosure includes a computer program product, which comprises a computer program that is tangibly embedded in a machine-readable medium. The computer program comprises program codes for executing the method as illustrated in the flow chart. In such an embodiment, the computer program may be downloaded and installed from a network via the communication portion 709, and/or may be installed from the removable media 711. The computer program, when executed by the central processing unit (CPU) 701, implements the above mentioned functionalities as defined by the methods of the present disclosure.

It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the present disclosure, the computer readable storage medium may be any physical medium containing or storing programs which can be used by a command execution system, apparatus or element or incorporated thereto. In the present disclosure, the computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

A computer program code for executing operations in the disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units involved in the embodiments of the present disclosure may be implemented by means of software or hardware. The described units may also be provided in a processor, for example, described as: a processor including a vehicle reservation request receiving unit and a vehicle reservation request transmitting unit. Here, he names of these units or modules do not in some cases constitute a limitation to such units or modules themselves. For example, the vehicle reservation request receiving unit may also be described as a unit for receiving a vehicle reservation request submitted by a user;

In another aspect, the present disclosure further provides a computer-readable medium. The computer-readable medium may be the computer-readable medium included in the apparatus in the above described embodiments, or a stand-alone computer-readable medium not assembled into the apparatus. The computer-readable medium stores one or more programs. The one or more programs, when executed by a device, cause the device to: receive a vehicle reservation request submitted by a user, the vehicle reservation request including departure place information and destination information; and send the vehicle reservation request to a server providing support to a reservation of a vehicle, the server being configured to determine, based on the vehicle reservation request, an autonomous driving vehicle for picking up and dropping off the user..

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A method for reserving a vehicle, applied to a mobile terminal, the method comprising:
receiving a vehicle reservation request submitted by a user, the vehicle reservation request including departure place information and destination information; and
sending the vehicle reservation request to a server providing support to a reservation of the vehicle, the server being configured to determine, based on the vehicle reservation request, an autonomous driving vehicle for picking up and dropping off the user.

2. The method according to claim 1, further comprising:
receiving a vehicle reservation result returned by the server, the vehicle reservation result including vehicle information of the autonomous driving vehicle and estimated pick-up and drop-off information.

3. The method according to claim 1, wherein the vehicle reservation request further includes a desired departing moment and/or a desired arrival moment.

4. The method according to claim 1, further comprising:
receiving, in real time, location information of the autonomous driving vehicle sent by the server; and
displaying, in real time, a driving trajectory of the autonomous driving vehicle in an electronic map.

5. The method according to claim 1, further comprising:
sending a manual customer service call request to the server in response to detecting a manual customer service call operation submitted by the user, the manual customer service call request including a user identification of the user.

6. A method for reserving a vehicle, applied to a server, the method comprising:
receiving a vehicle reservation request sent by a mobile terminal, the vehicle reservation request including departure place information and destination information;
determining, based on the vehicle reservation request, an autonomous driving vehicle for picking up and dropping off a user; and
sending a driving command to the autonomous driving vehicle, the driving command being used for controlling the autonomous driving vehicle to travel to a place indicated by the departure place information.

7. The method according to claim 6, further comprising:
sending a vehicle reservation result to the mobile terminal, the vehicle reservation result including vehicle information of the autonomous driving vehicle and estimated pick-up and drop-off information.

8. The method according to claim 6, wherein the vehicle reservation request further includes a desired departing moment and/or a desired arrival moment.

9. The method according to claim 6, further comprising:
acquiring, in real time, location information of the autonomous driving vehicle; and
sending, in real time, the location information of the autonomous driving vehicle to the mobile terminal.

10. The method according to claim 6, further comprising:
determining a customer service terminal providing a call service for the user, in response to receiving a manual customer service call request sent by the mobile terminal; and
establishing a voice/video communication connection between the mobile terminal and the customer service terminal.

11. An apparatus for reserving a vehicle, applied to a mobile terminal, the apparatus comprising:
a vehicle reservation request receiving unit, configured to receive a vehicle reservation request submitted by a user, the vehicle reservation request including departure place information and destination information; and
a vehicle reservation request sending unit, configured to send the vehicle reservation request to a server providing support to a reservation of the vehicle, the server being configured to determine, based on the vehicle reservation request, an autonomous driving vehicle for picking up and dropping off the user.

12. An apparatus for reserving a vehicle, applied to a server, the apparatus comprising:
a vehicle reservation request receiving unit, configured to receive a vehicle reservation request sent by a mobile terminal, the vehicle reservation request including departure place information and destination information;
a vehicle determining unit, configured to determine, based on the vehicle reservation request, an autonomous driving vehicle for picking up and dropping off a user; and
a driving command sending unit, configured to send a driving command to the autonomous driving vehicle, the driving command being used for controlling the autonomous driving vehicle to travel to a place indicated by the departure place information.

13. An electronic device, comprising:
one or more processors; and
a storage apparatus, configured to store one or more programs,
wherein the one or more programs, when executed by the one or more processors, cause the one or more processors to implement the method according to any one of claims 1-10.

14. A computer readable medium, storing a computer program, wherein the program, when executed by a processor, implements the method according to any one of claims 1-10.
